# EUROPEAN PATENT SPECIFICATION

(11) **EP 4 516 942 B1**
(45) Date of publication and mention of the grant of the patent: **21.10.2026**
(21) Application number: 23937746.8
(22) Date of filing: 29.06.2023
(51) Int. Cl.: C22B 3/02, C22B 3/06, C22B 3/44, C22B 23/00, B01D 11/02, B01J 3/00, B01J 3/02, B01J 3/04, B01J 4/00, B01J 19/00, C01F 7/30, C01F 7/34, G05D 16/00, G05D 21/00, C22B 3/00, G05D 21/02, B01D 9/00, B01B 1/00, B01D 1/00, B01J 4/02, B01J 8/00, C01F 7/20, C22B 21/00, G05D 16/10

(54) **SYSTEM AND METHOD FOR REGULATING AI PRECIPITATION AMOUNT DURING HIGH-PRESSURE ACID LEACHING OF LATERITE NICKEL ORE**
SYSTEM UND VERFAHREN ZUR REGULIERUNG DER AL-FÄLLUNGSMENGE WÄHREND DER SAUREN HOCHDRUCKAUSLAUGUNG VON LATERITNICKELERZ
SYSTÈME ET PROCÉDÉ DE RÉGULATION DE QUANTITÉ DE PRÉCIPITATION D'AI LORS D'UNE LIXIVIATION ACIDE À HAUTE PRESSION DE MINERAI DE NICKEL LATÉRITIQUE

(43) Date of publication of application: 05.03.2025
(73) Proprietor: PT QMB New Energy Materials, Jakarta Selatan, Provinsi DKI Jakarta, 12950 (ID); PT ESG New Energy Material, Jakarta Selatan, Provinsi DKI Jakarta 12950 (ID); GEM Co., Ltd., Bao'an Center Area, Bao'an, Shenzhen Guangdong 518101 (CN); PT Gem Indonesia New Energy Materials, Jakarta 12950 (ID)
(72) Inventor: BRODJONEGORO, Satryo Soemantri, Jakarta 12950 (ID); XU, Kaihua, Shenzhen, Guangdong 518101 (CN); AJI, Tegar Mukti, Jakarta 12950 (ID); WANALDI, Rizky, Jakarta 12950 (ID); HASIBUAN, Andi Syaputra, Jakarta 12950 (ID); KRISTIYANTO, Evan Wahyu, Jakarta 12950 (ID); SALIM, Emil, Jakarta 12950 (ID); WANG, Yi, Jakarta 12950 (ID)
(74) Representative: Santarelli
(86) International application number: PCT/CN2023/103762
(87) International publication number: WO 2025/000331

(56) References cited:
- CN-A- 101 139 656
- CN-A- 101 509 072
- CN-A- 103 757 261
- CN-A- 107 099 679
- CN-A- 107 099 679
- CN-A- 109 837 386
- CN-A- 109 837 386
- CN-A- 110 541 081
- CN-A- 115 896 451
- JP-A- 2019 000 834
- QUENEAU P B ET AL: "CONTROL OF SILICA DEPOSITION DURING PRESSURE LET-DOWN OF ACIDIC LEACH SLURRIES", HYDROMETALLURGY. RESEARCH, DEVELOPMENT AND PLANT PRACTICE; [PROCEEDINGS OF THE INTERNATIONAL SYMPOSIUM ON HYDROMETALLURGY], WARRENDALE, METALLURG. SOC. OF AIME, US, vol. SYMP. 3, 6 March 1983 (1983-03-06), pages 121 - 137, XP002066866

## Description

### FIELD OF THE DISCLOSURE

The disclosure relates to the technical field of nickel ore processing, in particular to a system and method for regulating aluminum precipitation during high-pressure acid leaching of laterite nickel ore.

### BACKGROUND

Laterite nickel ore is an aggregated oxide containing nickel, iron, magnesium, cobalt, silicon, aluminum, and other elements, formed through long-term geological processes such as weathering, leaching, impregnation, and alteration of nickel-bearing olivine bedrock in tropical or subtropical regions. The iron element in it, due to severe oxidation, is in a valence state of +3, resulting in an overall reddish-brown appearance, hence its name laterite nickel ore. Unlike nickel sulfide ore, laterite nickel ore is a refractory oxide ore that cannot be effectively enriched in nickel through mineral processing methods. Therefore, the prevalent approach for processing it currently involves the steps of mineral processing, high-pressure acid leaching, and extraction to recover nickel from laterite nickel ore.

During the high-pressure leaching process of laterite nickel ore, the presence of aluminum can adversely affect production. In existing technologies, for example, a Chinese patent with publication number CN107099679A discloses a method for inhibiting aluminum leaching by adding sodium sulfate or potassium sulfate. By adding inhibitors, aluminum leaching in the autoclave is suppressed.

However, it faces the following issues: In reality, both excessively high and low aluminum content in the leachate can adversely affect production. Excessively high aluminum leaching rates consume significant amounts of neutralizing agents during subsequent pre-neutralization and iron-aluminum precipitation stages, generating large amounts of residue and imposing a greater production burden on subsequent processes. Conversely, excessively low aluminum leaching rates result in substantial hydrolysis of aluminum mainly in the autoclave and discharge pipes, producing significant amounts of scaling that increases the frequency of shutdowns for cleaning, thereby reducing production efficiency. Therefore, it is necessary to balance the leaching amount of aluminum to ensure that the leaching amount of aluminum element is neither too high nor too low to maintain production stability and reduce production costs.

Patent document CN 107099679A disclosed a method for inhibiting aluminum leaching in a laterite nickel ore high-pressure leaching process. According to the method, before the high-pressure leaching of the laterite nickel ore, sodium sulfate and/or potassium sulphate are added into the ore slurry of the laterite nickel ore to reduce the aluminum leaching rate; the mixed ore slurry is preheated and is then pumped into an autoclave for leaching; the leached ore slurry is subjected to flash evaporation to obtain the leached slurry.

Patent document CN 109837386A disclosed a leaching method of laterite nickel ore. The method comprises: adding concentrated sulfuric acid to the lateritic nickel ore slurry, pre-leaching at atmospheric pressure; performing oxygen pressure leaching to the reaction system after pre-leaching. In addition, after atmospheric pressure pre-leaching and before oxygen pressure leaching, the process also includes adding sodium salts and/or potassium salts to the pre-leaching slurry to promote the hydrolysis of iron and aluminum.

Queneau P. B. et al studied silica deposition on the internal surface of the equipment during flashing acid pressure leach slurry of nickeliferous laterite ores and discussed methods for minimizing amorphous silica build-up on the vessel surfaces.

### SUMMARY

The purpose of this disclosure is to provide a system and method for regulating aluminum precipitation during high-pressure acid leaching of laterite nickel ore to maintain the leaching amount of aluminum element within an appropriate range to improve production stability and reduce production costs. The invention is set out in the appended claims.

In order to solve the above technical problems, this disclosure provides a system for regulating aluminum precipitation during high-pressure acid leaching of laterite nickel ore, comprising:
an autoclave, which comprises a kettle body, a first feeding pipe, a second feeding pipe, and a discharge pipe, the kettle body is equipped with material inlets for adding materials; the first feeding pipe and the second feeding pipe are respectively connected to the interior of the kettle body, and are used to add a promoter that enhances the hydrolysis and precipitation of aluminum elements and an inhibitor that suppresses the hydrolysis and precipitation of aluminum elements into the kettle body; the discharge pipe is connected to the kettle body and is used to discharge the reactants within the kettle body;
a subsequent processing equipment, which is connected to the discharge pipe and is used to process the reactants; and,
a control device, which comprises a first valve, a second valve, a first pressure sensor, a second pressure sensor, an aluminum ion detection device, and a control unit; the first valve is installed on the first feeding pipe, and the second valve is installed on the second feeding pipe; the first pressure sensor is located inside the discharge pipe near the end connected to the kettle body, while the second pressure sensor is located inside the discharge pipe near the end connected to the subsequent processing equipment; the aluminum ion detection device is connected to the subsequent processing equipment and is used to detect the concentration of aluminum ions within the subsequent processing equipment; the control unit is connected to the first valve, the second valve, the first pressure sensor, the second pressure sensor, and the aluminum ion detection device; the control unit receives the detection results from the first pressure sensor, the second pressure sensor, and the aluminum ion detection device, and determines the flow rate of the promoter or inhibitor based on the comparison between the pressure difference between the first pressure sensor and the second pressure sensor and a first preset range, as well as the comparison between the aluminum ion concentration and a second preset range.

Furthermore, the control unit is also used for: increasing opening degree of the second valve when the pressure difference between the first pressure sensor and the second pressure sensor exceeds a first preset range.

Furthermore, the control device also comprises an early warning device that is electrically connected to the control unit; when the control unit determines that pipe scaling cannot be alleviated, it drives the early warning device to issue a warning message.

Furthermore, the condition for the control unit to determine that pipe scaling cannot be alleviated is when the pressure difference between the first pressure sensor and the second pressure sensor exceeds the first preset range and the opening degree of the second valve has reached its maximum.

Furthermore, the promoter is MgSO4.

Furthermore, the subsequent processing equipment comprises a flash evaporation mechanism and a leachate storage tank; the flash evaporation mechanism is connected to the discharge pipe, and the leachate storage tank is connected to the flash evaporation mechanism; the aluminum ion detection device is connected to the leachate storage tank and is used to detect aluminum ion concentration in the leachate stored within the leachate storage tank; the flash evaporation mechanism is used for flash evaporation treatment of the slurry, while the leachate storage tank is used for storing the leachate.

This disclosure also provides a method for regulating aluminum precipitation during high-pressure acid leaching of laterite nickel ore, which is based on the system for regulating aluminum precipitation during high-pressure acid leaching of laterite nickel ore, the method comprises the following steps:
obtaining the concentration of aluminum ions in the leachate and assessing whether it falls within a second preset range. If the concentration exceeds the second preset range, gradually increase the flow rate of either the inhibitor or the promoter until the concentration of aluminum ions returns to the second preset range;
obtaining the pressure difference across the discharge pipe, assessing whether it falls within a first preset range, and if it exceeds the first preset range, gradually increase the flow rate of the inhibitor being added.

Furthermore, the step of obtaining the pressure difference across the discharge pipe and assessing whether it falls within the first preset range, and if it exceeds the first preset range, gradually increasing the addition of an inhibitor, comprises the following steps:
obtaining the pressures at both ends of the discharge pipe and calculating the pressure difference between them;
comparing the calculated pressure difference with the first preset range;
if the pressure difference exceeds the first preset range, increasing opening degree of the second valve.

Furthermore, the method also comprises the following step: when it is determined that pipe scaling cannot be alleviated, issuing a reminder.

Furthermore, the condition for determining that pipe scaling cannot be alleviated is when the pressure difference across the discharge pipe exceeds the first preset range and the opening degree of the second valve has reached its maximum.

Compared with existing technologies, the beneficial effect of this disclosure is: this disclosure is equipped with a first valve, a second valve, a first pressure sensor, a second pressure sensor, an aluminum ion detection device, and a control unit. It can detect the pressure at both ends of the discharge pipe and the concentration of aluminum ions in the subsequent processing equipment. The control unit is capable of controlling the opening degrees of the first valve and the second valve based on the pressure difference across the discharge pipe and the aluminum ion concentration in the subsequent processing equipment, thereby adjusting the feed flow rates of the promoter and inhibitor. This enables the aluminum ion concentration in the leachate to stabilize within an appropriate range, effectively reducing fluctuations in the production process, achieving stable production, and lowering production and maintenance costs.

### BRIEF DESCRIPTION OF THE DRAWINGS

Accompanying drawings are for providing further understanding of embodiments of the disclosure. The drawings form a part of the disclosure and are for illustrating the principle of the embodiments of the disclosure along with the literal description. Apparently, the drawings in the description below are merely some embodiments of the disclosure, a person skilled in the art can obtain other drawings according to these drawings without creative efforts. In the figures:

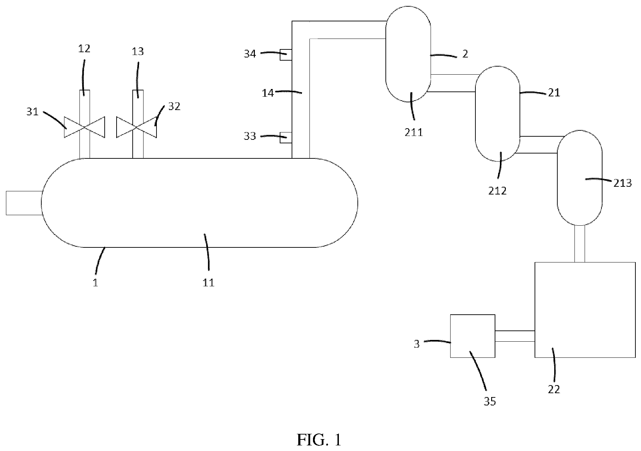

FIG. 1 is a schematic diagram of the system for regulating aluminum precipitation during high-pressure acid leaching of laterite nickel ore provided by this disclosure.

### DETAILED DESCRIPTION OF PREFERRED EMBODIMENTS

In order to further clarify the purpose, technical solution, and advantages of the present invention, the following will provide a detailed explanation of this disclosure in conjunction with the accompanying drawings and embodiments. It should be understood that the specific embodiments described herein are only used to explain this disclosure and are not intended to limit this disclosure.

Please refer to FIG. 1, which illustrates a system for regulating aluminum precipitation during high-pressure acid leaching of laterite nickel ore provided by this disclosure. The system comprises: an autoclave 1, subsequent processing equipment 2, and a control device 3.

The autoclave 1 comprises a kettle body 11, a first feeding pipe 12, a second feeding pipe 13, and a discharge pipe 14. The kettle body 11 is equipped with material inlets for adding materials. The first feeding pipe 12 and the second feeding pipe 13 are respectively connected to the interior of the kettle body 11, and are used to add a promoter that enhances the hydrolysis and precipitation of aluminum elements and an inhibitor that suppresses the hydrolysis and precipitation of aluminum elements into the kettle body 11. The discharge pipe 14 is connected to the kettle body 11 and is used to discharge the reactants within the kettle body 11.

The subsequent processing equipment 2 is connected to the discharge pipe 14 and is used to process the reactants.

The control device 3 comprises a first valve 31, a second valve 32, a first pressure sensor 33, a second pressure sensor 34, an aluminum ion detection device 35, and a control unit. The first valve 31 is installed on the first feeding pipe 12, and the second valve 32 is installed on the second feeding pipe 13. The first pressure sensor 33 is located inside the discharge pipe 14 near the end connected to the kettle body 11, while the second pressure sensor 34 is located inside the discharge pipe 14 near the end connected to the subsequent processing equipment 2. The aluminum ion detection device 35 is connected to the subsequent processing equipment 2 and is used to detect the concentration of aluminum ions within the subsequent processing equipment 2. The control unit is connected to the first valve 31, the second valve 32, the first pressure sensor 33, the second pressure sensor 34, and the aluminum ion detection device 35. The control unit receives the detection results from the first pressure sensor 33, the second pressure sensor 34, and the aluminum ion detection device 35, and determines the flow rate of the promoter or inhibitor based on the comparison between the pressure difference between the first pressure sensor 33 and the second pressure sensor 34 and a first preset range, as well as the comparison between the aluminum ion concentration and a second preset range.

In this disclosure, the system is equipped with a first valve 31, a second valve 32, a first pressure sensor 33, a second pressure sensor 34, an aluminum ion detection device 35, and a control unit. These components enable the detection of pressure at both ends of the discharge pipe 14 and the concentration of aluminum ions within the subsequent processing equipment 2. The control unit can adjust the degree of opening of the first valve 31 and the second valve 32 based on the pressure difference across the discharge pipe 14 and the aluminum ion concentration within the subsequent processing equipment 2, thereby regulating the flow rate of the promoter and inhibitor. This ensures that the aluminum ion concentration remains stable within an appropriate range, effectively reducing fluctuations during the production process, achieving stable production, and lowering production and maintenance costs.

Specifically, the inner wall of the kettle body 11 is equipped with a titanium infiltration layer, which can provide corrosion resistance and extend its service life.

Specifically, the material inlets comprise a first inlet for adding slurry, a second inlet for adding sulfuric acid, and a third inlet for introducing steam.

Specifically, the promoter is MgSO₄.

Specifically, the inhibitor is alunite.

Specifically, the subsequent processing equipment 2 comprises a flash evaporation mechanism 21 and a leachate storage tank 22. The flash evaporation mechanism 21 is connected to the discharge pipe 14, and the leachate storage tank 22 is connected to the flash evaporation mechanism 21. The aluminum ion detection device 35 is connected to the leachate storage tank 22 and is used to detect aluminum ion concentration in the leachate stored within the leachate storage tank 22. The flash evaporation mechanism 21 is used for flash evaporation treatment of the slurry, while the leachate storage tank 22 is used for storing the leachate.

Furthermore, the flash evaporation mechanism 21 comprises a first-stage flash evaporator 211, a second-stage flash evaporator 212, and a third-stage flash evaporator 213. The first-stage flash evaporator 211, the second-stage flash evaporator 212, and the third-stage flash evaporator 213 are connected in sequence. The first-stage flash evaporator 211 is connected to the discharge pipe 14, and the third-stage flash evaporator 213 is connected to the leachate storage tank 22.

Furthermore, the control unit is also used for: when the detection result of the aluminum ion detection device 35 is above a second preset range, increasing opening degree of the second valve 32 until the detection result of the aluminum ion detection device 35 falls back within the second preset range; and when the detection result of the aluminum ion detection device 35 is below the second preset range, increasing opening degree of the first valve 31 until the detection result of the aluminum ion detection device 35 rises within the second preset range.

Furthermore, the control unit is also used for: increasing opening degree of the second valve 32 when the pressure difference between the first pressure sensor 33 and the second pressure sensor 34 exceeds a first preset range.

Furthermore, the control device also comprises an early warning device that is electrically connected to the control unit. When the control unit determines that pipe scaling cannot be alleviated, it drives the early warning device to issue a warning message.

Furthermore, the condition for the control unit to determine that pipe scaling cannot be alleviated is when the pressure difference between the first pressure sensor 33 and the second pressure sensor 34 exceeds the first preset range and the opening degree of the second valve 32 has reached its maximum.

This disclosure also provides a method for regulating aluminum precipitation during high-pressure acid leaching of laterite nickel ore, based on the system for regulating aluminum precipitation during high-pressure acid leaching of laterite nickel ore. The method comprises the following steps:
obtaining the concentration of aluminum ions in the leachate and assessing whether it falls within a second preset range. If the concentration exceeds the second preset range, gradually increase the flow rate of either the inhibitor or the promoter until the concentration of aluminum ions returns to the second preset range;
obtaining the pressure difference across the discharge pipe, assessing whether it falls within a first preset range, and if it exceeds the first preset range, gradually increase the flow rate of the inhibitor being added.

Furthermore, the step of obtaining the pressure difference across the discharge pipe and assessing whether it falls within the first preset range, and if it exceeds the first preset range, gradually increasing the addition of an inhibitor, specifically comprises the following:
obtaining the pressures at both ends of the discharge pipe and calculating the pressure difference between them;
comparing the calculated pressure difference with the first preset range;
if the pressure difference exceeds the first preset range, increasing opening degree of the second valve.

Furthermore, the method also comprises the following step: when it is determined that pipe scaling cannot be alleviated, issuing a reminder to shut down the equipment for cleaning.

Furthermore, the condition for determining that pipe scaling cannot be alleviated is when the pressure difference across the discharge pipe exceeds the first preset range and the opening degree of the second valve has reached its maximum.

### Embodiment 1:

The concentration of aluminum ions in the leachate is greatly influenced by the concentration of aluminum ions in the incoming ore and the parameters of the high-pressure acid leaching process. The concentration of aluminum ions in the leachate increases as the concentration of aluminum ions in the incoming ore and the leaching temperature decrease. Therefore, to verify the effectiveness of this disclosure, the concentration of aluminum ions in the leachate after treating slurries with different concentrations of aluminum ions in the raw ore at different acid leaching temperatures was recorded before and after implementing this disclosure. The specific data is presented in the following table:

| | Raw ore aluminum ion concentration (%) | | Acid leaching temperature | | Aluminum ion concentration in leachate (g/L) | |
|---|---|---|---|---|---|---|
| Before implementation | | 1.14 | | 250 | | 5.9 |
| | | 1.13 | | 245 | | 6.3 |
| | | 1.25 | | 250 | | 9.8 |
| | | 1.25 | | 245 | | 12.2 |
| After implementation | | 1.15 | | 250 | | 6.8 |
| | | 1.15 | | 245 | | 7.0 |
| | | 1.3 | | 250 | | 7.1 |
| | | 1.3 | | 245 | | 7.1 |

It can be seen that before the implementation of this disclosure, the concentration of aluminum ions in the leachate was greatly influenced by the concentration of aluminum ions in the incoming ore and the parameters of the high-pressure acid leaching process, resulting in significant fluctuations in the concentration of aluminum ions in the leachate. However, after implementing this disclosure, regardless of the variations in the concentration of aluminum ions in the raw ore and the acid leaching temperature, the fluctuations in the concentration of aluminum ions in the leachate are significantly reduced and maintained within an appropriate range, which is conducive to achieving stable production and reducing production and maintenance costs.

This disclosure has the following advantages compared to existing technologies:

This disclosure is equipped with a first valve 31, a second valve 32, a first pressure sensor 33, a second pressure sensor 34, an aluminum ion detection device 35, and a control unit. It can detect the pressure across the discharge pipe 14 and the concentration of aluminum ions in the subsequent processing equipment 2. The control unit can control the opening degrees of the first valve 31 and the second valve 32 based on the pressure difference across the discharge pipe 14 and the concentration of aluminum ions in the subsequent processing equipment 2, adjusting the flow rates of the promoter and inhibitor added, thereby stabilizing the concentration of aluminum ions in the leachate within an appropriate range. This effectively reduces fluctuations in the production process, enabling stable production and lowering production and maintenance costs.

## Claims

1. A system for regulating aluminum precipitation during high-pressure acid leaching of laterite nickel ore, comprising:
an autoclave (1), which comprises a kettle body (11), a first feeding pipe (12), a second feeding pipe (13), and a discharge pipe (14), the kettle body (11) is equipped with material inlets for adding materials; the first feeding pipe (12) and the second feeding pipe (13) are respectively connected to the interior of the kettle body, and are used to add a promoter that enhances the hydrolysis and precipitation of aluminum elements and an inhibitor that suppresses the hydrolysis and precipitation of aluminum elements into the kettle body (11); the discharge pipe (14) is connected to the kettle body (11) and is used to discharge the reactants within the kettle body;
a subsequent processing equipment (2), which is connected to the discharge pipe (14) and is used to process the reactants; and,
a control device (3), which comprises a first valve (31), a second valve (32), a first pressure sensor (33), a second pressure sensor (34), an aluminum ion detection device (35), and a control unit; the first valve (31) is installed on the first feeding pipe (12), and the second valve (32) is installed on the second feeding pipe (13); the first pressure sensor (33) is located inside the discharge pipe (14) near the end connected to the kettle body, while the second pressure sensor (34) is located inside the discharge pipe (14) near the end connected to the subsequent processing equipment (2); the aluminum ion detection device (35) is connected to the subsequent processing equipment (2) and is used to detect the concentration of aluminum ions within the subsequent processing equipment; the control unit is connected to the first valve (31), the second valve (32), the first pressure sensor (33), the second pressure sensor (34), and the aluminum ion detection device (35); the control unit configured to receive the detection results from the first pressure sensor (33), the second pressure sensor (34), and the aluminum ion detection device (35), and to determine the flow rate of the promoter or inhibitor based on the comparison between the pressure difference between the first pressure sensor (33) and the second pressure sensor (34) and a first preset range, as well as the comparison between the aluminum ion concentration and a second preset range, wherein if the aluminum ion concentration exceeds the second preset range, the control unit is configured to gradually increase the flow rate of either the inhibitor or the promoter until the concentration of aluminum ions returns to the second preset range, and if the pressure difference exceeds the first preset range, the control unit is configured to gradually increase the flow rate of the inhibitor.

2. The system for regulating aluminum precipitation during high-pressure acid leaching of laterite nickel ore according to claim 1, wherein the control unit is also used for: increasing opening degree of the second valve (32) when the pressure difference between the first pressure sensor and the second pressure sensor exceeds a first preset range.

3. The system for regulating aluminum precipitation during high-pressure acid leaching of laterite nickel ore according to claim 1, wherein the control device also comprises an early warning device that is electrically connected to the control unit; the control unit is configured to drive the early warning device to issue a warning message when the control unit determines that pipe scaling cannot be alleviated, and a condition for the control unit to determine that pipe scaling cannot be alleviated is defined as when the pressure difference between the first pressure sensor (33) and the second pressure sensor (34) exceeds the first preset range and the opening degree of the second valve (32) has reached its maximum.

4. The system for regulating aluminum precipitation during high-pressure acid leaching of laterite nickel ore according to claim 3, configured to operate with the promoter which is MgSO₄.

5. The system for regulating aluminum precipitation during high-pressure acid leaching of laterite nickel ore according to claim 1, wherein the subsequent processing equipment (2) comprises a flash evaporation mechanism (21) and a leachate storage tank (22); the flash evaporation mechanism (21) is connected to the discharge pipe (14), and the leachate storage tank (22) is connected to the flash evaporation mechanism (21); the aluminum ion detection device (35) is connected to the leachate storage tank (22) and is used to detect aluminum ion concentration in the leachate stored within the leachate storage tank; the flash evaporation mechanism (21) is used for flash evaporation treatment of the slurry, while the leachate storage tank (22) is used for storing the leachate.

6. A method for regulating aluminum precipitation during high-pressure acid leaching of laterite nickel ore, using the system for regulating aluminum precipitation during high-pressure acid leaching of laterite nickel ore according to any one of claims 1 to 5, wherein the method comprises the following steps:
obtaining the concentration of aluminum ions in the leachate and assessing whether it falls within a second preset range; if the concentration exceeds the second preset range, gradually increase the flow rate of either the inhibitor or the promoter until the concentration of aluminum ions returns to the second preset range;
obtaining the pressure difference across the discharge pipe (14), assessing whether it falls within a first preset range, and if it exceeds the first preset range, gradually increasing the flow rate of the inhibitor being added.

7. The method for regulating aluminum precipitation during high-pressure acid leaching of laterite nickel ore according to claim 6, wherein the step of obtaining the pressure difference across the discharge pipe and assessing whether it falls within the first preset range, and if it exceeds the first preset range, gradually increasing the addition of an inhibitor, comprises the following steps:
obtaining the pressures at both ends of the discharge pipe (14) and calculating the pressure difference between them;
comparing the calculated pressure difference with the first preset range;
if the pressure difference exceeds the first preset range, increasing opening degree of the second valve (32).

8. The method for regulating aluminum precipitation during high-pressure acid leaching of laterite nickel ore according to claim 6, wherein the method also comprises the following step: when it is determined that pipe scaling cannot be alleviated, issuing a reminder.

9. The method for regulating aluminum precipitation during high-pressure acid leaching of laterite nickel ore according to claim 8, wherein a condition for determining that pipe scaling cannot be alleviated is when the pressure difference across the discharge pipe (14) exceeds the first preset range and the opening degree of the second valve (32) has reached its maximum.

## Patentansprüche

1. System zur Regulierung der Aluminiumausfällung während der Hochdruck-Säureauslaugung von Laterit-Nickelerz, umfassend:
einen Autoklaven (1), der einen Kesselkörper (11), ein erstes Zuführrohr (12), ein zweites Zuführrohr (13) und ein Ablaufrohr (14) umfasst, wobei der Kesselkörper (11) mit Materialeinlässen zum Hinzufügen von Materialien ausgestattet ist; das erste Zuführrohr (12) und das zweite Zuführrohr (13) jeweils mit dem Inneren des Kesselkörpers verbunden sind und dazu verwendet werden, einen Promotor, der die Hydrolyse und Ausfällung von Aluminiumelementen fördert, und einen Inhibitor, der die Hydrolyse und Ausfällung von Aluminiumelementen unterdrückt, in den Kesselkörper (11) hinzuzufügen; das Ablaufrohr (14) ist mit dem Kesselkörper (11) verbunden und wird dazu verwendet, die Reaktanten aus dem Kesselkörper abzulassen;
eine nachgeschaltete Aufbereitungseinrichtung (2), die mit dem Ablaufrohr (14) verbunden ist und zur Aufbereitung der Reaktanten verwendet wird; und
eine Steuervorrichtung (3), die ein erstes Ventil (31), ein zweites Ventil (32), einen ersten Drucksensor (33), einen zweiten Drucksensor (34), eine Aluminiumionen-Detektionsvorrichtung (35) und eine Steuereinheit umfasst; das erste Ventil (31) ist an dem ersten Zuführrohr (12) installiert, und das zweite Ventil (32) ist an dem zweiten Zuführrohr (13) installiert; der erste Drucksensor (33) befindet sich innrhalb des Ablaufrohrs (14) in der Nähe des mit dem Kesselkörper verbundenen Endes, während sich der zweite Drucksensor (34) innerhalb des Ablaufrohrs (14) in der Nähe des mit der nachgeschalteten Aufbereitungseinrichtung (2) verbundenen Endes befindet; die Aluminiumionen-Detektionsvorrichtung (35) ist mit der nachgeschalteten Aufbereitungseinrichtung (2) verbunden und wird dazu verwendet, die Konzentration von Aluminiumionen innerhalb der nachgeschalteten Aufbereitungseinrichtung zu detektieren; die Steuereinheit ist mit dem ersten Ventil (31), dem zweiten Ventil (32), dem ersten Drucksensor (33), dem zweiten Drucksensor (34) und der Aluminiumionen-Detektionsvorrichtung (35) verbunden; die Steuereinheit ist so konfiguriert, dass sie die Detektionsergebnisse von dem ersten Drucksensor (33), dem zweiten Drucksensor (34) und der Aluminiumionen-Detektionsvorrichtung (35) empfängt und die Durchflussrate des Promotors oder Inhibitors basierend auf dem Vergleich zwischen der Druckdifferenz zwischen dem ersten Drucksensor (33) und dem zweiten Drucksensor (34) und einem ersten voreingestellten Bereich sowie dem Vergleich zwischen der Aluminiumionenkonzentration und einem zweiten voreingestellten Bereich festlegt, wobei, wenn die Aluminiumionenkonzentration den zweiten voreingestellten Bereich überschreitet, die Steuereinheit so konfiguriert ist, dass sie die Durchflussrate entweder des Inhibitors oder des Promotors schrittweise erhöht, bis die Konzentration der Aluminiumionen wieder in den zweiten voreingestellten Bereich zurückkehrt, und wenn die Druckdifferenz den ersten voreingestellten Bereich überschreitet, ist die Steuereinheit so konfiguriert, dass sie die Durchflussrate des Inhibitors schrittweise erhöht.

2. System zur Regulierung der Aluminiumausfällung während der Hochdruck-Säureauslaugung von Laterit-Nickelerz nach Anspruch 1, wobei die Steuereinheit auch für Folgendes verwendet wird: Erhöhen des Öffnungsgrads des zweiten Ventils (32), wenn die Druckdifferenz zwischen dem ersten Drucksensor und dem zweiten Drucksensor einen ersten voreingestellten Bereich überschreitet.

3. System zur Regulierung der Aluminiumausfällung während der Hochdruck-Säureauslaugung von Laterit-Nickelerz nach Anspruch 1, wobei die Steuervorrichtung auch eine Frühwarnvorrichtung umfasst, die elektrisch mit der Steuereinheit verbunden ist; die Steuereinheit so konfiguriert ist, dass sie die Frühwarnvorrichtung ansteuert, um eine Warnmeldung auszugeben, wenn die Steuereinheit feststellt, dass eine Rohrverkalkung nicht verringert werden kann, und eine Bedingung für die Steuereinheit, dass eine Rohrverkalkung nicht verringert werden kann, definiert ist, als wenn die Druckdifferenz zwischen dem ersten Drucksensor (33) und dem zweiten Drucksensor (34) den ersten voreingestellten Bereich überschreitet und der Öffnungsgrad des zweiten Ventils (32) sein Maximum erreicht hat.

4. System zur Regulierung der Aluminiumausfällung während der Hochdruck-Säureauslaugung von Laterit-Nickelerz nach Anspruch 3, das für den Betrieb mit dem Promotor MgSO₄ konfiguriert ist.

5. System zur Regulierung der Aluminiumausfällung während der Hochdruck-Säureauslaugung von Laterit-Nickelerz nach Anspruch 1, wobei die nachfolgende Aufarbeitungseinrichtung (2) einen Flash-Verdampfungsmechanismus (21) und einen Sickerwasserspeichertank (22) umfasst; der Flash-Verdampfungsmechanismus (21) ist mit dem Ablaufrohr (14) verbunden, und der Sickerwasserspeichertank (22) ist mit dem Flash-Verdampfungsmechanismus (21) verbunden; die Aluminiumionen-Detektionsvorrichtung (35) ist mit dem Sickerwasserspeichertank (22) verbunden und wird dazu verwendet, die Aluminiumionenkonzentration in dem in dem Sickerwasserspeichertank gelagerten Sickerwasser zu detektieren; der Flash-Verdampfungsmechanismus (21) wird zur Flash-Verdampfungsbehandlung der Aufschlämmung verwendet, während der Sickerwasserspeichertank (22) zur Lagerung des Sickerwassers verwendet wird.

6. Verfahren zur Regulierung der Aluminiumausfällung während der Hochdruck-Säureauslaugung von Laterit-Nickelerz unter Verwendung des Systems zur Regulierung der Aluminiumausfällung während der Hochdruck-Säureauslaugung von Laterit-Nickelerz nach einem der Ansprüche 1 bis 5, wobei das Verfahren die folgenden Schritte umfasst:
Ermitteln der Konzentration von Aluminiumionen in dem Sickerwasser und Beurteilen, ob sie innerhalb eines zweiten voreingestellten Bereichs liegt; wenn die Konzentration den zweiten voreingestellten Bereich überschreitet, schrittweises Erhöhen der Durchflussrate entweder des Inhibitors oder des Promotors, bis die Konzentration von Aluminiumionen wieder in den zweiten voreingestellten Bereich zurückkehrt;
Ermitteln der Druckdifferenz überall in dem Ablaufrohr (14), Beurteilen, ob sie innerhalb eines ersten voreingestellten Bereichs liegt, und wenn sie den ersten voreingestellten Bereich überschreitet, schrittweises Erhöhen der Durchflussrate des hinzugeführten Inhibitors.

7. Verfahren zur Regulierung der Aluminiumausfällung während der Hochdruck-Säureauslaugung von Laterit-Nickelerz nach Anspruch 6, wobei der Schritt des Ermittelns der Druckdifferenz überall in dem Ablaufrohr und des Beurteilens, ob sie innerhalb des ersten voreingestellten Bereichs liegt, und wenn sie den ersten voreingestellten Bereich überschreitet, des schrittweisen Erhöhens der Zugabe eines Inhibitors, die folgenden Schritte umfasst:
Ermitteln der Drücke an beiden Enden des Ablaufrohrs (14) und Berechnen der Druckdifferenz zwischen ihnen;
Vergleichen der berechneten Druckdifferenz mit dem ersten voreingestellten Bereich;
wenn die Druckdifferenz den ersten voreingestellten Bereich überschreitet, Erhöhen des Öffnungsgrads des zweiten Ventils (32).

8. Verfahren zur Regulierung der Aluminiumausfällung während der Hochdruck-Säureauslaugung von Laterit-Nickelerz nach Anspruch 6, wobei das Verfahren auch den folgenden Schritt umfasst: wenn festgestellt wird, dass eine Rohrverkalkung nicht verringert werden kann, Ausgeben eines Erinnerungshinweises.

9. Verfahren zur Regulierung der Aluminiumausfällung während der Hochdruck-Säureauslaugung von Laterit-Nickelerz nach Anspruch 8, wobei eine Bedingung für das Feststellen, dass eine Rohrverkalkung nicht verringert werden kann, darin besteht, dass die Druckdifferenz überall in dem Ablaufrohr (14) den ersten voreingestellten Bereich überschreitet und der Öffnungsgrad des zweiten Ventils (32) sein Maximum erreicht hat.

## Revendications

1. Système de régulation de la précipitation d'aluminium lors d'une lixiviation acide à haute pression de minerai de nickel latéritique, comportant :
un autoclave (1), qui comporte un corps (11), un premier tuyau d'alimentation (12), un deuxième tuyau d'alimentation (13) et un tuyau d'évacuation (14), le corps (11) est équipé d'entrées de matière pour l'ajout de matières ; le premier tuyau d'alimentation (12) et le deuxième tuyau d'alimentation (13) sont respectivement raccordés à l'intérieur du corps, et sont utilisés pour ajouter un promoteur qui améliore l'hydrolyse et la précipitation d'éléments d'aluminium et un inhibiteur qui supprime l'hydrolyse et la précipitation d'éléments d'aluminium dans le corps (11) ; le tuyau d'évacuation (14) est raccordé au corps (11) et est utilisé pour évacuer les réactifs à l'intérieur du corps ;
un équipement de traitement ultérieur (2), qui est raccordé au tuyau d'évacuation (14) et est utilisé pour traiter les réactifs ; et,
un dispositif de commande (3), qui comporte une première vanne (31), une deuxième vanne (32), un premier capteur de pression (33), un deuxième capteur de pression (34), un dispositif de détection d'ions aluminium (35) et une unité de commande ; la première vanne (31) est installée sur le premier tuyau d'alimentation (12), et la deuxième vanne (32) est installée sur le deuxième tuyau d'alimentation (13) ; le premier capteur de pression (33) est situé à l'intérieur du tuyau d'évacuation (14) près de l'extrémité raccordée au corps, tandis que le deuxième capteur de pression (34) est situé à l'intérieur du tuyau d'évacuation (14) près de l'extrémité raccordée à l'équipement de traitement ultérieur (2) ; le dispositif de détection d'ions aluminium (35) est raccordé à l'équipement de traitement ultérieur (2) et est utilisé pour détecter la concentration d'ions aluminium à l'intérieur de l'équipement de traitement ultérieur ; l'unité de commande est raccordée à la première vanne (31), à la deuxième vanne (32), au premier capteur de pression (33), au deuxième capteur de pression (34) et au dispositif de détection d'ions aluminium (35) ; l'unité de commande étant configurée pour recevoir les résultats de détection du premier capteur de pression (33), du deuxième capteur de pression (34) et du dispositif de détection d'ions aluminium (35), et pour déterminer le débit du promoteur ou de l'inhibiteur sur la base de la comparaison entre la différence de pression entre le premier capteur de pression (33) et le deuxième capteur de pression (34) et une première plage prédéfinie, ainsi que de la comparaison entre la concentration d'ions aluminium et une deuxième plage prédéfinie, dans lequel si la concentration d'ions aluminium dépasse la deuxième plage prédéfinie, l'unité de commande est configurée pour augmenter progressivement le débit de l'inhibiteur ou du promoteur jusqu'à ce que la concentration d'ions aluminium revienne à la deuxième plage prédéfinie, et si la différence de pression dépasse la première plage prédéfinie, l'unité de commande est configurée pour augmenter progressivement le débit de l'inhibiteur.

2. Système de régulation de la précipitation d'aluminium lors d'une lixiviation acide à haute pression de minerai de nickel latéritique selon la revendication 1, dans lequel l'unité de commande est également utilisée pour : augmenter le degré d'ouverture de la deuxième vanne (32) lorsque la différence de pression entre le premier capteur de pression et le deuxième capteur de pression dépasse une première plage prédéfinie.

3. Système de régulation de la précipitation d'aluminium lors d'une lixiviation acide à haute pression de minerai de nickel latéritique selon la revendication 1, dans lequel le dispositif de commande comporte également un dispositif d'avertissement précoce qui est électriquement connecté à l'unité de commande ; l'unité de commande est configurée pour entraîner le dispositif d'avertissement précoce à émettre un message d'avertissement lorsque l'unité de commande détermine que l'entartrage du tuyau ne peut pas être atténué, et une condition pour que l'unité de commande détermine que l'entartrage du tuyau ne peut pas être atténué est définie comme lorsque la différence de pression entre le premier capteur de pression (33) et le deuxième capteur de pression (34) dépasse la première plage prédéfinie et que le degré d'ouverture de la deuxième vanne (32) a atteint son maximum.

4. Système de régulation de la précipitation d'aluminium lors d'une lixiviation acide à haute pression de minerai de nickel latéritique selon la revendication 3, configuré pour fonctionner avec le promoteur qui est du MgSO₄.

5. Système de régulation de la précipitation d'aluminium lors d'une lixiviation acide à haute pression de minerai de nickel latéritique selon la revendication 1, dans lequel l'équipement de traitement ultérieur (2) comporte un mécanisme d'évaporation instantanée (21) et un réservoir de stockage de lixiviat (22) ; le mécanisme d'évaporation instantanée (21) est raccordé au tuyau d'évacuation (14), et le réservoir de stockage de lixiviat (22) est raccordé au mécanisme d'évaporation instantanée (21) ; le dispositif de détection d'ions aluminium (35) est raccordé au réservoir de stockage de lixiviat (22) et est utilisé pour détecter la concentration d'ions aluminium dans le lixiviat stocké à l'intérieur du réservoir de stockage de lixiviat ; le mécanisme d'évaporation instantanée (21) est utilisé pour le traitement d'évaporation instantanée de la boue, tandis que le réservoir de stockage de lixiviat (22) est utilisé pour stocker le lixiviat.

6. Procédé de régulation de la précipitation d'aluminium lors d'une lixiviation acide à haute pression de minerai de nickel latéritique, utilisant le système de régulation de la précipitation d'aluminium lors d'une lixiviation acide à haute pression de minerai de nickel latéritique selon l'une quelconque des revendications 1 à 5, dans lequel le procédé comporte les étapes suivantes :
l'obtention de la concentration d'ions aluminium dans le lixiviat et l'évaluation de la présence ou non dans une deuxième plage prédéfinie ; si la concentration dépasse la deuxième plage prédéfinie, l'augmentation progressive du débit de l'inhibiteur ou du promoteur jusqu'à ce que la concentration d'ions aluminium revienne dans la deuxième plage prédéfinie ;
l'obtention de la différence de pression à travers le tuyau d'évacuation (14), l'évaluation de la présence ou non d'une première plage prédéfinie et, si elle dépasse la première plage prédéfinie, l'augmentation progressive du débit de l'inhibiteur ajouté.

7. Procédé de régulation de la précipitation d'aluminium lors d'une lixiviation acide à haute pression de minerai de nickel latéritique selon la revendication 6, dans lequel l'étape d'obtention de la différence de pression à travers le tuyau d'évacuation et d'évaluation si elle se situe dans la première plage prédéfinie, et si elle dépasse la première plage prédéfinie, en augmentant progressivement l'ajout d'un inhibiteur, comporte les étapes suivantes :
l'obtention des pressions au niveau des deux extrémités du tuyau d'évacuation (14) et le calcul de la différence de pression entre elles ;
la comparaison de la différence de pression calculée avec la première plage prédéfinie ;
si la différence de pression dépasse la première plage prédéfinie, l'augmentation du degré d'ouverture de la deuxième vanne (32).

8. Procédé de régulation de la précipitation d'aluminium lors d'une lixiviation acide à haute pression de minerai de nickel latéritique selon la revendication 6, dans lequel le procédé comporte également l'étape suivante : lorsqu'il est déterminé que l'entartrage du tuyau ne peut pas être atténué, l'émission d'un rappel.

9. Procédé de régulation de la précipitation d'aluminium lors d'une lixiviation acide à haute pression de minerai de nickel latéritique selon la revendication 8, dans lequel une condition pour déterminer que l'entartrage du tuyau ne peut pas être atténué est lorsque la différence de pression à travers le tuyau d'évacuation (14) dépasse la première plage prédéfinie et que le degré d'ouverture de la deuxième vanne (32) a atteint son maximum.
